# EUROPÄISCHE PATENTSCHRIFT

(11) **EP 4 163 232 B1**
(45) Veröffentlichungstag und Bekanntmachung des Hinweises auf die Patenterteilung: **28.10.2026**
(21) Anmeldenummer: 22207001.3
(22) Anmeldetag: 25.05.2021
(51) Int. Cl.: B65G 1/04

(54) **TRANSPORTFAHRZEUG ZUM EINSATZ IN EINEM LAGER- UND ENTNAHMESYSTEM FÜR BEHÄLTER SOWIE EIN LAGER- UND ENTNAHMESYSTEM**
TRANSPORT VEHICLE FOR USE IN A STORAGE AND REMOVAL SYSTEM FOR CONTAINERS, AND A STORAGE AND REMOVAL SYSTEM
VÉHICULE DE TRANSPORT DESTINÉ À ÊTRE UTILISÉ DANS UN SYSTÈME DE STOCKAGE ET DE RÉCUPÉRATION DE RÉCIPIENTS ET SYSTÈME DE STOCKAGE ET DE RÉCUPÉRATION

(30) Priorität: 24.06.2020 DE 102020207852
(43) Veröffentlichungstag der Anmeldung: 12.04.2023
(62) Dokumentnummer(n) der früheren Anmeldung(en) nach Art. 76 EPÜ: 21175780.2 / 3 929 107
(73) Patentinhaber: Gebhardt Fördertechnik GmbH, 74889 Sinsheim (DE)
(72) Erfinder: Gebhardt, Marco, 74889 Sinsheim (DE); Knoop, Alexander, 74889 Sinsheim (DE); Eder, Jörg, 67661 Kaiserslautern (DE)
(74) Vertreter: Ullrich & Naumann PartG mbB

(56) Entgegenhaltungen:
- WO-A1-2019/076760
- WO-A1-2019/101725
- WO-A1-2021/239509

## Beschreibung

Die Erfindung betrifft ein Verfahren zum Zugreifen auf einen Behälter in einem Lager- und Entnahmesystem gemäß dem Oberbegriff des Anspruchs 1.

Des Weiteren betrifft die Erfindung ein Verfahren zum Zugreifen auf einen Behälter in einem Lager- und Entnahmesystem gemäß dem Oberbegriff des Anspruchs 2.

Bei derartigen Verfahren verwendete Transportfahrzeuge der in Rede stehenden Art zum Einsatz in Lager- und Entnahmesystemen für Behälter sind seit einigen Jahren aus der Praxis bekannt und finden insbesondere in Lager- und Entnahmesystemen ihre Anwendung, die als spezielle automatisierte Blocklager ausgebildet sind. Diese speziellen Warenlager sind entwickelt worden, um herkömmliche Warenlager insbesondere im Hinblick auf die realisierbare Lagerdichte zu verbessern. Bei herkömmlichen Warenlagern befindet sich das Lagergut üblicherweise in Lagerbehältern, welche in Regalen gelagert werden, die in Regalreihen angeordnet sind. Jeder Lagerbehälter enthält dabei eine Vielzahl von Produkten eines Produkttyps. Die Bedienung eines solchen Warenlagers erfolgt über Freiräume zwischen den Regalreihen, den sogenannten Lagergassen, in denen mittels eines Transportsystems, bspw. einem Regalbediengerät oder einem Shuttle-System, die einzelnen Regalfächer angefahren werden können. Da die Lagergassen für die eigentliche Lagerung nicht zur Verfügung stehen, ist die Lagerdichte derartiger Warenlager relativ niedrig. Mit anderen Worten ist die Größe des tatsächlich für die Lagerung von Produkten zur Verfügung stehenden Raums relativ klein im Vergleich zu der Größe des Raums, der für das Warenlager insgesamt erforderlich ist.

Demgegenüber verfolgen die oben angesprochenen automatisierten Blocklager - sog. Gridstores - einen alternativen Ansatz. Danach werden die Lagerbehälter nicht mehr in konventionellen Regalen gelagert, sondern die Lagerbehälter werden in einem selbsttragenden modularen Aluminiumraster, welches vertikale Schächte definierter Größe bildet, übereinandergestapelt. Die Stapel sind dabei in einer Längsrichtung und in einer Querrichtung in Reihen angeordnet. Auf die einzelnen Lagerbehälter wird von oben mittels geeigneter Transportfahrzeuge zugegriffen, die sich üblicherweise auf entsprechenden Fahrschienen bewegen, die in Form einer 2D Matrix auf der Regalstruktur angeordnet sind. Dementsprechend müssen zwischen den Reihen keine Lagergassen ausgebildet sein, weshalb diese Lagerstruktur eine deutliche Verbesserung der Lagerungsdichte bietet. Derartige automatisierte Blocklager, die eines der Hauptanwendungsfelder für Transportfahrzeuge bilden, sind teilweise auch unter der Kennzeichnung AutoStore^{®} bekannt.

Die WO 2017/153583 A1 zeigt ein derartiges Lager- und Entnahmesystem zusammen mit einem entsprechenden Transportfahrzeug. Das Transportfahrzeug, welches einen zentralen, nach unten geöffneten Aufnahmeraum zur Aufnahme von Transportgut in Form von genormten Lagerbehältern umfasst, verfügt über ein Fahrwerk mit zwei Radsätzen mit jeweils vier Rädern, wobei einer der Radsätze für eine Bewegung des Transportfahrzeugs auf einer gitterförmigen Schienenstruktur in einer Längsrichtung und der andere Radsatz für eine Bewegung in einer dazu orthogonalen Querrichtung ausgelegt ist. Für die Ausführung von Richtungswechseln können die Radsätze in einer vertikalen Richtung bewegt werden, um somit von der Schienenstruktur abgehoben bzw. auf diese abgesenkt zu werden.

Des Weiteren zeigt die WO 2015/019055 A1 ein ähnliches Transportfahrzeug, bei dem im unteren Bereich des Transportfahrzeugs ein Aufnahmeraum für einen Behälter gebildet ist. Der Antrieb für Räder eines Fahrwerks des Transportfahrzeugs ist oberhalb des Aufnahmeraums angeordnet.

Weiterhin ist aus der EP 3 192 751 A1 ein Transportfahrzeug bekannt, das auf einer Gitterstruktur eines Lager- und Entnahmesystems für Behälter fahren kann. Das Transportfahrzeug weist eine Greifeinrichtung zum Erfassen, Bewegen und Absetzen eines Behälters auf, wobei der Behälter mittels der Greifeinrichtung seitlich des Transportfahrzeugs bewegt werden kann. Das Transportfahrzeug ist derart ausgebildet, dass es je nach Betriebsposition der Greifeinrichtung mindestens zwei Gitterzellen der Gitterstruktur abdeckt bzw. für andere Greifeinrichtungen blockiert.

Des Weiteren ist aus der WO 2019/238703 A1 ein Transportfahrzeug zum Einsatz auf einer Gitterstruktur eines Lager- und Entnahmesystems für Behälter bekannt, wobei das Transportfahrzeug einen unteren Fahrzeugkasten aufweist, in dem alle Fahrantriebe und das Fahrwerk angeordnet sind. Auf diesem Fahrzeugkasten können unterschiedliche Funktionselemente wie beispielsweise ein Rollenförderer oder eine Greifeinrichtung angeordnet werden.

Die bekannten Transportfahrzeuge sowie Lager- und Entnahmesysteme sind dahingehend problematisch, dass je nach Positionierung eines Behälters, auf den ein Zugriff gewünscht ist, dieser Zugriff unter Umständen äußerst lange dauert, insbesondere wenn dieser Behälter tief in einem als Blocklager ausgebildeten Lager- und Entnahmesystem, d. h. unter vielen anderen Behältern, positioniert ist. Im Konkreten bedeutet dies ein zeitintensives sukzessives Anheben und Umlagern der darüberliegenden anderen Behälter. Die bislang bekannten Transportfahrzeuge sowie Lager- und Entnahmesysteme versuchen diese Problematik mit verschiedenen Ausgestaltungen zu lösen. Jedoch sind sämtliche dieser Ausgestaltungen im Hinblick auf einen besonders schnellen Zugriff auf beliebige Behälter unbefriedigend.

Des Weiteren zeigt die WO 2019/076760 A1, welche die Merkmale der Oberbegriffe der Ansprüche 1 und 2 offenbart, ein Verfahren zum Zugreifen auf einen Behälter 106 in einem Lager- und Entnahmesystem, wobei mindestens ein Transportfahrzeug 3 eingesetzt wird.

Auch die WO 2019/101725 A1 zeigt ein Verfahren zum Zugreifen auf einen Behälter 106 in einem Lager- und Entnahmesystem, wobei mindestens ein Transportfahrzeug 3 eingesetzt wird. Das Transportfahrzeug 3 weist ein Fahrwerk sowie eine Greifeinrichtung 12 zum Erfassen, Bewegen und Absetzen eines oder mehrerer Behälter 106 auf. Allerdings weist das Transportfahrzeug 3 keinen oberhalb des Fahrwerks ausgebildeten Aufnahmeraum für einen oder mehrere Behälter 106 auf.

Schließlich zeigt die WO 2021/239509 A1 ein Verfahren zum Zugreifen auf einen Behälter in einem Lager- und Entnahmesystem, wobei mindestens ein Transportfahrzeug eingesetzt wird.

Der vorliegenden Erfindung liegt die Aufgabe zugrunde, ein Verfahren zum Zugreifen auf einen Behälter in einem Lager- und Entnahmesystem anzugeben, wonach ein besonders schneller und effizienter Zugriff auf beliebige Behälter mit konstruktiv einfachen Mitteln ermöglicht ist.

Erfindungsgemäß wird die voranstehende Aufgabe durch ein Verfahren mit den Merkmalen des Anspruchs 1 sowie durch ein Verfahren mit den Merkmalen des Anspruchs 2 gelöst.

Zur Verwendung bei dem Verfahren kann die Greifeinrichtung zu einer besonders vielseitigen und umfassenden Funktionalität ausgebildet sein, wonach ein Erfassen des oder der Behälter seitlich außerhalb des Aufnahmeraums und ein Bewegen des oder der Behälter in den Aufnahmeraum und/oder ein Bewegen des oder der Behälter aus dem Aufnahmeraum nach seitlich außerhalb des Aufnahmeraums ermöglicht sind. Hierdurch sind ein flexibles Aufnehmen und gegebenenfalls Zwischenlagern eines oder mehrerer Behälter in dem Aufnahmeraum sowie ein einfaches Positionieren eines oder mehrerer Behälter beispielsweise beim "Ausgraben" tief unten liegender Behälter in einem Blocklager ermöglicht. Dabei kann ein durch die Greifeinrichtung seitlich des Aufnahmeraums erfasster Behälter entweder in den Aufnahmeraum bewegt werden oder es kann ein derart erfasster Behälter ohne ein vorheriges Aufnehmen in den Aufnahmeraum durch beispielsweise ein Verfahren des Transportfahrzeugs an eine für beispielsweise eine Zwischenlagerung geeignete Stelle transportiert werden. Wenn ein oder mehrere übereinander positionierte Behälter in den Aufnahmeraum bewegt sind, ist es möglich, dass das gesamte Transportfahrzeug mit dem oder den im Aufnahmeraum befindlichen Behälter oder Behältern lediglich eine Gitterzelle überdecken. Dadurch werden durch dieses Transportfahrzeug mögliche weitere Transportfahrzeuge bei deren Aufgaben und Tätigkeiten in geringstmöglichem Maß beeinträchtigt, was weiterhin einen besonders effektiven Betrieb eines Transportfahrzeugs und Lager- und Entnahmesystems ergibt.

Im Hinblick auf einen besonders effizienten und einfachen Zugriff auf beliebige Behälter kann die Greifeinrichtung derart ausgebildet sein, dass ein Absetzen des oder der Behälter in dem Aufnahmeraum ermöglicht ist. Bei beispielsweise einem erforderlichen schnellen Verfahren des Transportfahrzeugs wird hierdurch die Greifeinrichtung weniger belastet, da sie den Behälter oder die Behälter während des Verfahrens nicht mehr halten muss. Hierdurch kann sich auch eine Verbesserung der Fahreigenschaften des Transportfahrzeugs ergeben, da ein abgesetzter oder abgesetzte Behälter üblicherweise zu einem niedrigeren Schwerpunkt des Transportfahrzeugs mit verbesserten Fahreigenschaften führt oder führen. Des Weiteren kann die Greifeinrichtung in diesem Zustand gegebenenfalls noch einen oder mehrere weitere Behälter erfassen und damit zusätzlich zu dem oder den bereits im Aufnahmeraum abgesetzten Behälter oder Behältern noch einen weiteren oder mehrere weitere Behälter transportieren, der oder die sich dann im mittels der Greifeinrichtung erfassten Zustand befindet oder befinden.

Weiterhin hinsichtlich eines besonders effizienten und einfachen Zugriffs auf beliebige Behälter kann die Greifeinrichtung derart ausgebildet sein, dass der oder die Behälter horizontal oder seitlich in den Aufnahmeraum bewegt werden können. Hierdurch ist ein besonders direktes und damit zeitsparendes und effektives Bewegen von Behältern ermöglicht, ohne dass diese beispielsweise über das Transportfahrzeug und/oder den Aufnahmeraum geschwenkt werden müssen, bevor sie in einer Transport- oder Aufnahmeposition hinsichtlich des Transportfahrzeugs angelangt sind.

Weiterhin im Hinblick auf einen besonders effizienten Zugriff und Betrieb des Transportfahrzeugs und des Lager- und Entnahmesystems kann die Greifeinrichtung derart ausgebildet sein, dass der oder die Behälter von verschiedenen Seiten aus, insbesondere von einander gegenüberliegenden Seiten aus, in den Aufnahmeraum bewegt werden können. Hierdurch ist ein hohes Maß an Flexibilität im Hinblick auf den Vorgang des Aufnehmens eines oder mehrerer Behälter in den Aufnahmeraum bereitgestellt, was ein besonders schnelles Zugreifen auf Behälter beispielsweise bei einem "Ausgraben" von tief angeordneten Behältern in einem Blocklager zur Folge hat. Ein Zugang von einander gegenüberliegende Seiten bietet weiterhin die Möglichkeit, dass Behälter auf der einen Seite in den Aufnahmeraum geführt und auf der anderen Seite aus dem Aufnahmeraum heraus bewegt werden. Auch dies ermöglicht ein besonders Zeit sparendes Betreiben eines Transportfahrzeugs und Lager- und Entnahmesystems.

Hinsichtlich einer besonders sicheren und konstruktiv einfachen Ausgestaltung kann die Greifeinrichtung oder ein Modul der Greifeinrichtung mittels einer Führung oder einer Kulisse in horizontaler Richtung geführt oder verschiebbar sein. Dabei kann die Greifeinrichtung oder ein Modul der Greifeinrichtung ein mit dem Fahrwerk oder Aufnahmeraum fest verbundenes Teil und ein hierzu geführtes oder verschiebbares Teil aufweisen, das ein Greifelement zum Erfassen eines oder mehrerer Behälter aufweisen kann. Eine teleskopartige Führung ist möglich. Bei einer Führung der Greifeinrichtung in einer Kulisse kann meist ein Antriebsmotor weniger verwendet werden, als bei einer anderen Art der Führung.

In besonders effizienter Weise kann die Greifeinrichtung einerseits für das Anheben und Absetzen und andererseits für das Bewegen des oder der Behälter unterschiedliche Antriebe aufweist. Dabei können die jeweiligen Antriebe an die jeweils individuell erforderlichen Betriebsweisen und Funktionalitäten in effizienter Weise angepasst sein. In Platz sparender Weise könnte jedoch auch ein gemeinsamer Antrieb für diese beiden Funktionalitäten realisiert sein, um einen besonders kompakten Aufbau des Transportfahrzeugs zu realisieren.

In konkreter Weise kann ein Antrieb für das Anheben und Absetzen des oder der Behälter an einem relativ zu dem Aufnahmeraum und/oder Fahrwerk ortsfesten Teil der Greifeinrichtung oder an einem relativ zu dem Aufnahmeraum und/oder Fahrwerk beweglichen Teil der Greifeinrichtung fixiert ist. Hierbei ist bei der Wahl der Konstruktion auf den jeweiligen Anwendungsfall im Hinblick auf einen einfachen und schnellen Zugriff auf beliebige Behälter abzustellen.

Im Hinblick auf einen besonders vielseitigen Einsatz des Transportfahrzeugs kann der Aufnahmeraum derart dimensioniert sein, dass mehrere Behälter nebeneinander und/oder übereinander in dem Aufnahmeraum anordenbar sind. Dies ermöglicht - bei Bedarf - ein Zwischenlagern mehrerer Behälter in dem Aufnahmeraum. Ein Anordnen der Behälter nebeneinander ermöglicht einen individuellen Zugriff auf jeden Behälter, ohne dass vorher andere Behälter umgelagert werden müssen. Ein Anordnen der Behälter übereinander bringt den Vorteil, dass im besten Fall auch bei einem Zwischenlagern mehrerer Behälter im Aufnahmeraum nur eine Gitterzelle durch das Transportfahrzeug abgedeckt und damit für andere Transportfahrzeuge blockiert wird. Eine Anordnung von Behältern nebeneinander und übereinander bietet die Möglichkeit des Zwischenlagerns einer besonders großen Anzahl von Behältern im Aufnahmeraum.

In besonders flexibler Weise kann die Dimensionierung, insbesondere die Höhe, des Aufnahmeraums und damit die Dimensionierung, insbesondere die Höhe, des Transportfahrzeugs variierbar sein, wobei vorzugsweise das Transportfahrzeug eine Linearführung und/oder einen Antrieb zur Variierung der Dimensionierung oder Höhe aufweist. Falls mehrere Behälter nebeneinander und/oder übereinander im Aufnahmeraum gestapelt werden sollen, kann die Dimensionierung und damit die Größe des Aufnahmeraums und des Transportfahrzeugs entsprechend verändert oder vergrößert werden. Dies hat jedoch aufgrund der damit erreichten größeren Dimension den Nachteil einer größeren Trägheit des Transportfahrzeugs für erforderliche Fahrbewegungen zur Folge. Besonders schnelle Bewegungen des Transportfahrzeugs, insbesondere Richtungswechsel, sind hierdurch oft nicht mehr möglich. Wenn im besten Fall jedoch nur ein Behälter im Aufnahmeraum aufzunehmen ist, so kann die Dimensionierung auf eine möglichst geringe Größe variiert oder reduziert werden, wodurch auch besonders schnelle Bewegung des Transportfahrzeugs wieder ermöglicht werden. Insoweit ist es empfehlenswert, die Dimensionierung des Aufnahmeraums und/oder des Transportfahrzeugs derart zu wählen, dass nicht mehr Volumen an Aufnahmeraum als erforderlich bereitgestellt ist. Im Hinblick auf die Veränderung oder Variation der Dimensionierung kommt insbesondere eine Veränderung oder Variation der Höhe infrage, damit beispielsweise das Transportfahrzeug nicht unnötig viele Gitterzellen in einem Blocklager abdeckt oder blockiert. Die Variation der Dimensionierung kann in besonders einfacher Weise über eine Linearführung des Transportfahrzeugs erfolgen, wobei in besonders schneller und daher effizienter Weise ein vorzugsweise elektrischer Antrieb zur Variation der Dimensionierung oder Höhe vorgesehen sein kann.

Weiterhin im Hinblick auf einen besonders schnellen und effizienten Zugriff auf beliebige Behälter kann die Höhe der Greifeinrichtung und/oder eines Greifelements der Greifeinrichtung, beispielsweise ein Haken, variierbar sein, sodass ein Erfassen und/oder ein Absetzen des oder der Behälter in unterschiedlichen vorgebbaren Höhen erfolgen kann. Dabei kann insbesondere bei mehreren übereinander gestapelten Behältern die Höhe der Greifeinrichtung und/oder eines Greifelements der Greifeinrichtung an die Höhenposition des obersten Behälters angepasst oder auf diese Höhenposition variiert oder verfahren werden, um ein sicheres Erfassen des obersten Behälters zu ermöglichen. Nach einem derartigen Erfassen des obersten Behälters kann die Höhe der Greifeinrichtung und/oder eines Greifelements der Greifeinrichtung wieder variiert oder verfahren werden, um den erfassten Behälter gegebenenfalls an eine andere Stelle mit einer anderen Höhenposition zu bewegen.

Die Greifeinrichtung kann auf unterschiedliche Weise mit dem Aufnahmeraum oder dem Fahrwerk gekoppelt werden. Dabei können Greifeinrichtungen unterschiedlicher Größe und Leistungsfähigkeit in alternativer Weise mit dem Aufnahmeraum oder dem Fahrwerk koppelbar sein, um Transportfahrzeuge bereitzustellen, die in individueller Weise an den jeweiligen Anwendungsfall angepasst sind. Der Aufnahmeraum kann grundsätzlich durch einen Rahmen gebildet sein, der den Aufnahmeraum mit seinen Rahmenelementen bildet oder begrenzt. Grundsätzlich kann die Greifeinrichtung in oder an einem oberen Bereich des Aufnahmeraums gelagert sein, wobei die Greifeinrichtung beispielsweise mit einem derartigen Rahmen gekoppelt werden kann. Alternativ hierzu kann die Greifeinrichtung einen oberen Bereich oder oberen Abschluss des Aufnahmeraums bilden. Das bedeutet, das mindestens ein Bereich der Greifeinrichtung zur Begrenzung des Aufnahmeraums beiträgt.

Weiterhin im Hinblick auf einen besonders schnellen und effizienten Zugriff auf beliebige Behälter kann ein Antrieb für das Transportfahrzeug - insbesondere im Bereich des Fahrwerks - unterhalb des Aufnahmeraums angeordnet sein. Dieser Antrieb, der zum Bewegen des Transportfahrzeugs oder zum Antreiben von Rädern des Transportfahrzeugs dient, kann quasi in das Fahrwerk integriert sein. Die Anordnung des Antriebs unterhalb des Aufnahmeraums hat einen besonders tiefen Schwerpunkt des Transportfahrzeugs und damit ein besonders sicheres Fahren des Transportfahrzeugs zur Folge, wobei auch bei einer Beladung mit mehreren Behältern das Risiko eines Umkippens des Transportfahrzeugs vermindert wird.

Ebenfalls zur Gewährleistung eines besonders schnellen und effizienten Zugriffs auf beliebige Behälter kann das Transportfahrzeug derart ausgebildet sein, dass es bei eingefahrener Greifeinrichtung 1 bis 1,5 Gitterzellen eines Lager- und Entnahmesystems überdeckt. Hierdurch ist ein Blockieren oder Behindern möglicher weiterer Transportfahrzeuge beispielsweise bei einem Blocklager im Vergleich mit bekannten Transportfahrzeugen signifikant vermindert.

Weiterhin im Hinblick auf einen besonders schnellen und effizienten Zugriff auf beliebige Behälter kann das Lager- und Entnahmesystem eine zentrale oder direkte/dezentrale Steuereinrichtung zur Steuerung der Bewegung eines oder mehrerer Behälter - insbesondere bei Vorhandensein mehrerer Transportfahrzeuge - aufweisen. Bei der Wahl der Ausgestaltung der Steuereinrichtung kann auf den individuellen Anwendungsfall abgestellt werden.

Bei Ausführungsbeispielen des Transportfahrzeugs und des Lager- und Entnahmesystems kann das Transportfahrzeug Behälter neben einem einfach aufgebauten Fahrwerk anheben und diese Behälter dann mithilfe eines zusätzlichen Antriebs und/oder Führungen seitlich in das Transportfahrzeug einfahren.

Bedeutsame Vorteile von Ausführungsbeispielen des Transportfahrzeugs und des Lager- und Entnahmesystems sind beispielsweise:
- Das Transportfahrzeug kann auf beiden Seiten ohne eine Fahrzeugbewegung Behälter aufnehmen und absetzen, was ein sehr effizientes "Ausgraben" von Behältern in einem Blocklager ermöglicht.
- Der Fahrzeugschwerpunkt ist bei einem unterhalb des Aufnahmeraums angeordneten Fahrwerk und Antrieb im Vergleich mit bekannten Transportfahrzeugen, welche die Behälter in das Transportfahrzeug heben und den Antrieb oder die Antriebstechnik darüber aufweisen, weit unten.
- Ein einfacher Aufbau des Antriebs oder der Antriebseinheit ist möglich, da viel Platz vorhanden ist und kein Platz durch den Aufnahmeraum im Antriebsbereich verbraucht wird, der gegebenenfalls umbaut werden muss.
- Ein Absetzen des Behälters im Transportfahrzeug bzw. Aufnahmeraum entlastet die Greifeinrichtung während einer hochdynamischen Fahrt des Transportfahrzeugs auf einem Gitter eines Blocklager.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht ein Transportfahrzeug auf einer Gitterstruktur eines Lager- und Entnahmesystems für Behälter in zwei unterschiedlichen Betriebszuständen,
- Fig. 2: in einer schematischen Seitenansicht ein weiteres Ausführungsbeispiel eines Transportfahrzeugs auf einer Gitterstruktur eines Lager- und Entnahmesystems für Behälter,
- Fig. 3: in einer perspektivischen Darstellung das Ausführungsbeispiel des Transportfahrzeugs aus Fig. 2 auf einer Gitterstruktur eines Lager- und Entnahmesystems für Behälter,
- Fig. 4: in einer perspektivischen Darstellung das Ausführungsbeispiel des Transportfahrzeugs aus Fig. 1 und
- Fig. 5: in einer perspektivischen Darstellung das Ausführungsbeispiel des Transportfahrzeugs aus den Fig. 1 und 4 auf einer Gitterstruktur eines Lager- und Entnahmesystems für Behälter.

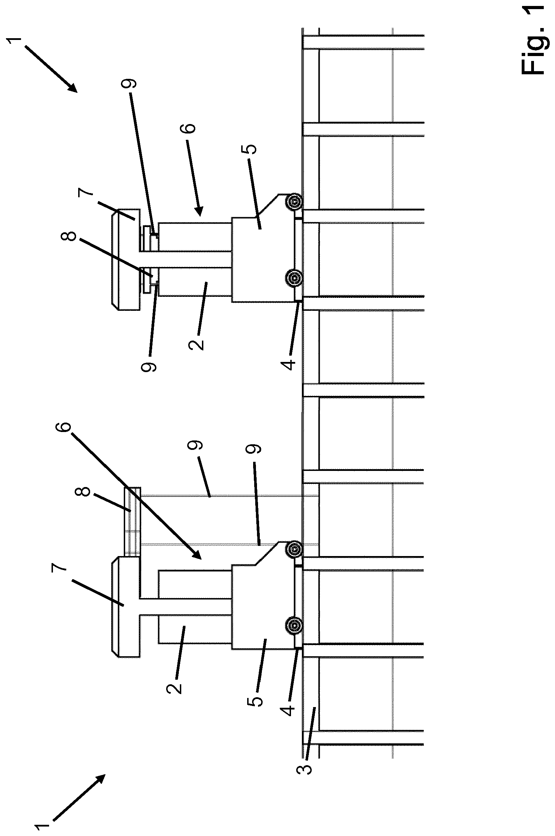

Fig. 1 zeigt in einer schematischen Seitenansicht ein Ausführungsbeispiel eines Transportfahrzeugs 1 zum Einsatz in einem Lager- und Entnahmesystem für Behälter 2. Dabei ist das Transportfahrzeug 1 auf einer Gitterstruktur 3 des hier als Blocklager ausgebildeten Lager- und Entnahmesystems angeordnet.

Das Transportfahrzeug 1 weist ein Fahrwerk 4 mit einem Antrieb 5 auf, wobei das Fahrwerk 4 und der Antrieb 5 als eine Einheit in einem unteren Bereich des Transportfahrzeugs 1 ausgebildet sind, um einen möglichst niedrigen Schwerpunkt des Transportfahrzeugs 1 bereitzustellen. Weiterhin weist das Transportfahrzeug 1 einen oberhalb des Fahrwerks 4 ausgebildeten Aufnahmeraum 6 für einen Behälter 2 sowie eine Greifeinrichtung 7 zum Erfassen, Bewegen und Absetzen eines Behälters 2 auf. Die Greifeinrichtung 7 ist derart ausgebildet, dass ein Erfassen des Behälters 2 seitlich außerhalb des Aufnahmeraums 6 und ein Bewegen des Behälters 2 in den Aufnahmeraum 6 ermöglicht ist. Des Weiteren ist die Greifeinrichtung 7 derart ausgebildet, dass ein Bewegen des Behälters 2 aus dem Aufnahmeraum 6 nach seitlich außerhalb des Aufnahmeraums 6 ermöglicht ist. Im Ergebnis kann der Behälter 2 mittels der Greifeinrichtung 7 in den Aufnahmeraum 6 und aus dem Aufnahmeraum 6 heraus bewegt werden.

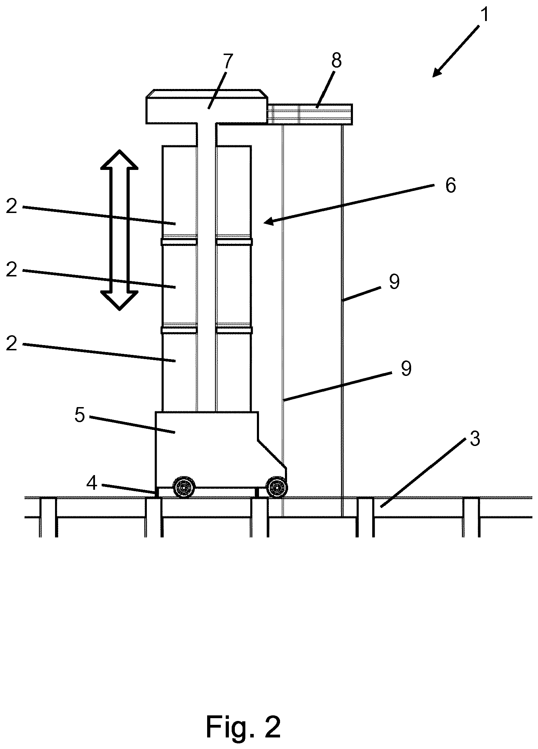

Fig. 2 zeigt in einer schematischen Seitenansicht ein weiteres Ausführungsbeispiel eines Transportfahrzeugs 1 auf einer Gitterstruktur 3 eines Lager- und Entnahmesystems für Behälter 2. Bei diesem Ausführungsbeispiel ist der Aufnahmeraum 6 derart dimensioniert, dass mehrere Behälter 2 - hier im Konkreten drei Behälter 2 - im Aufnahmeraum 6 übereinander gestapelt werden können. Hierzu ist die Greifeinrichtung 7 in ihrer Höhe einstellbar, was durch den links neben dem Transportfahrzeug 1 gezeigten Doppelpfeil angedeutet ist. Je nach Anzahl der aufzunehmenden Behälter 2 kann die Greifeinrichtung 7 in ihrer Höhe verfahren werden, wozu das Transportfahrzeug 1 eine hier der Einfachheit halber nicht gezeigte Führung für die Greifeinrichtung 7 aufweist.

Der Fig. 1 ist entnehmbar, dass die Greifeinrichtung 7 ein horizontal verschiebbares Element 8 aufweist, das mit LAM, Lastaufnahmemittel, gekennzeichnet ist. An dem Element 8 sind hier schematisch dargestellte Greifelemente 9 zum Erfassen eines oder mehrerer Behälter 2 angeordnet. Das Element 8 ist auch bei dem in Fig. 2 gezeigten Ausführungsbeispiel in gleicher Weise horizontal verschiebbar und weist entsprechend dimensionierte Greifelemente 9 auf.

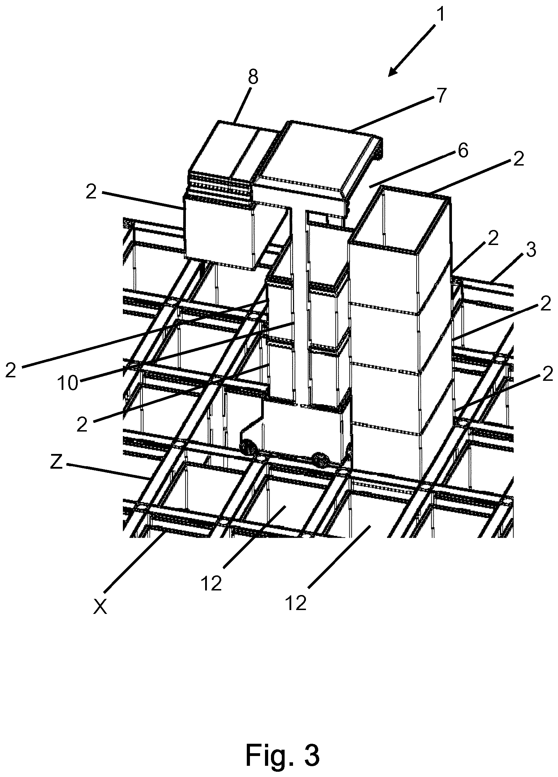

Fig. 3 zeigt in einer perspektivischen Darstellung das Ausführungsbeispiel des Transportfahrzeugs 1 aus Fig. 2 auf einer Gitterstruktur 3 eines Lager- und Entnahmesystems für Behälter 2. In dieser Fig. 3 ist erkennbar, dass die Greifeinrichtung 7 mit dem Element 8 sowohl links als auch rechts neben dem Transportfahrzeug 1 Behälter 2 erfassen und bewegen kann. Hierzu kann das Element 8 nicht nur nach einer Seite horizontal ausgefahren werden, sondern auch auf die entgegengesetzte Seite. Der Aufnahmeraum 6 ist dabei oben durch die Greifeinrichtung 7 begrenzt. Eine Verfahrmöglichkeit der Greifeinrichtung 7 mit dem Element 8 kann entlang einer Säule 10 des Transportfahrzeugs 1 erfolgen. Die Säule 10 kann einen Teleskopmechanismus oder eine Linearführung zum Bewegen der Greifeinrichtung 7 nach oben und nach unten aufweisen. Je nach Höhenposition der Greifeinrichtung 7 ergibt sich ein unterschiedlich dimensionierter Aufnahmeraum 6 für einen oder mehrere Behälter 2. So kann aus dem in Fig. 1 gezeigten Ausführungsbeispiel des Transportfahrzeugs 1 das in den Fig. 2 und 3 gezeigte Ausführungsbeispiel des Transportfahrzeugs 1 - lediglich durch ein Verfahren der Greifeinrichtung 7 nach oben - gebildet werden.

Des Weiteren ist in Fig. 3 besonders gut erkennbar, dass Behälter 2 in dem Aufnahmeraum 6 und damit im Transportfahrzeug 1 abgesetzt werden können. Das Transportfahrzeug 1 wird mit seiner Greifeinrichtung 7 zum Stapeln oder Umstapeln von Behältern 2 neben dem Transportfahrzeug 1 genutzt.

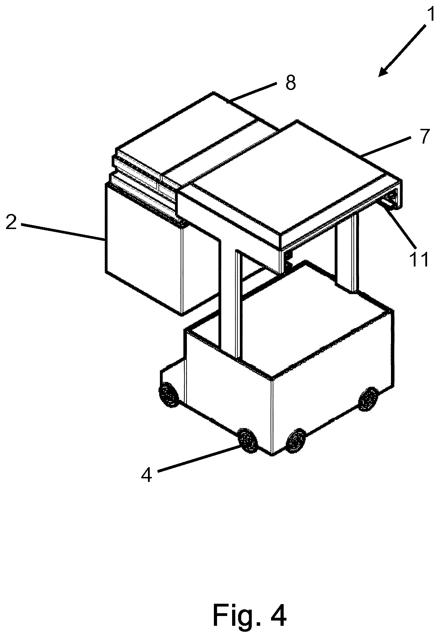

Fig. 4 zeigt in einer perspektivischen Darstellung das Ausführungsbeispiel des Transportfahrzeugs aus Fig. 1. Auch hier ist gut erkennbar, dass das Element 8 der Greifeinrichtung 7 an zwei gegenüberliegenden Seiten des Transportfahrzeugs 1 ausgefahren werden kann. Hierzu dient eine Führung 11 der Greifeinrichtung 7.

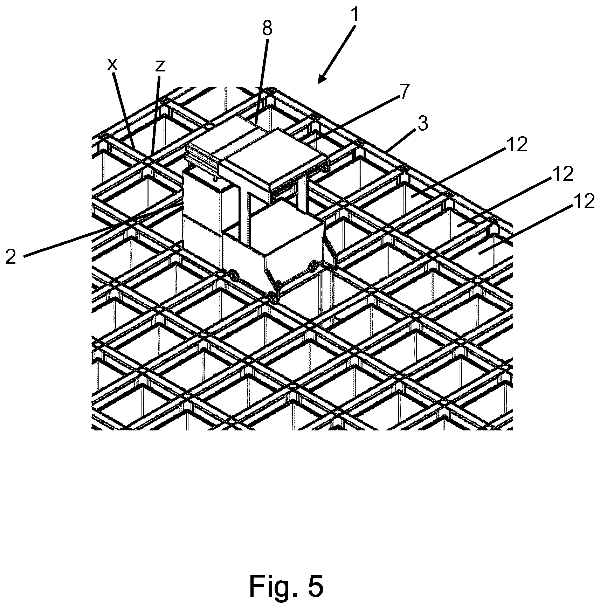

Fig. 5 zeigt in einer perspektivischen Darstellung das Ausführungsbeispiel des Transportfahrzeugs 1 aus den Fig. 1 und 4 auf einer Gitterstruktur 3 eines Lager- und Entnahmesystems für Behälter 2.

Die Fahrwerke 4 sämtlicher hier gezeigte Ausführungsbeispiele des Transportfahrzeugs 1 sind derart ausgelegt, dass die Transportfahrzeuge 1 als bidirektionale Transportfahrzeuge 1 und zum Fahren in zueinander senkrechten Richtungen ausgebildet sind.

Gemäß den Fig. 3 und 5 sind Gitterstrukturen 3 eines Ausführungsbeispiels eines Lager- und Entnahmesystems für Behälter 2 besonders detailliert dargestellt. Die Gitterstrukturen 3 weisen eine Vielzahl von Gitterzellen 12 auf, wobei jede Gitterzelle 12 eine Lagersäule einer unterhalb der Gitterstruktur 3 angeordneten Behälter-Lagerstruktur definiert. Diese Lagersäulen sind eingerichtet, jeweils einen vertikalen Stapel von Behältern 2 aufzunehmen, wobei die Gitterstruktur 3 Längstransportwege in einer Längsrichtung X und Quertransportwege in einer Querrichtung Z definiert. Sämtliche Transportfahrzeuge 1 können sowohl vorwärts und rückwärts als auch in X-Richtung und in Z-Richtung fahren.

Ausführungsformen im Hinblick auf die zuvor erläuterten Ausführungsbeispiele und deren Vorteile werden im Folgenden nochmals besonders erläutert und/oder ergänzt:
Die Höhe des Transportfahrzeugs 1 kann größer sein als nur die Höhe eines Behälters 2, um gegebenenfalls mehrere Behälter 2 übereinander gestapelt im Aufnahmeraum 6 aufzunehmen oder abzusetzen. Das Transportfahrzeug 1 kann jedoch auch als Transportfahrzeug 1 mit unveränderbar Dimensionierung, d. h. beispielsweise mit einem Aufnahmeraum 6 für nur einen Behälter 2 oder auch für eine andere fixierte Anzahl an Behältern 2, ausgebildet sein. Dabei können mehrere Behälter 2 aufgenommen und gegebenenfalls neben dem Transportfahrzeug 1 aufgetürmt werden, um das "Ausgraben" effizienter zu gestalten.

Die Höhe des Transportfahrzeugs 1 von beispielsweise mehr als nur einen Behälter 2 kann aktiv durch das Transportfahrzeug 1 variiert werden, um mehrere Behälter 2 aufzunehmen und gegebenenfalls neben dem Transportfahrzeug 1 aufzutürmen. Hierzu kann eine Linearführung mit einem vorzugsweise elektrischen Antrieb vorgesehen sein, um die Höhe zu variieren. Ein niedrigeres Transportfahrzeug 1 ermöglicht mit einem oder wenigen Behältern 2 eine hohe Dynamik des Transportfahrzeugs 1 mit einer schnellen Versorgung eines Arbeitsplatzes. Im Gegensatz hierzu kann ein hohes Transportfahrzeug 1 langsam viele Behälter 2 transportieren. Ein "Aushub" aus einem Lager- und Entnahmesystem kann hierbei sehr platzsparend übereinander im oder neben dem ausgegrabenen Schacht zwischengelagert werden, um ein schnelles "Ausgraben" und damit einen schnellen Zugriff zu einem gewünschten Behälter 2 zu ermöglichen.

Ein "Aushub" kann neben und/oder im Aufnahmeraum 6 des Transportfahrzeugs 1 in mehreren Etagen aufgetürmt werden. Dabei können aber müssen nicht viele Behälter 2 auf einmal gegriffen werden, sondern es kann stets ein Behälter 2 nach dem anderen bewegt werden. Insbesondere ein derartiges Auftürmen kann mit mehr als einem Transportfahrzeug durchgeführt werden.

Die Greifeinrichtung 7 weist einen horizontalen Ausfahrmechanismus zum Ausfahren des Elements 8 auf. Der Ausfahrmechanismus des Transportfahrzeugs 1 befindet sich am Kopf des Transportfahrzeugs 1 über den Steuerungen und Energiespeichern des Transportfahrzeugs 1, die im Bereich des Antriebs 5 oder des Fahrwerks 4 angeordnet sind.

Der Ausfahrmechanismus bewegt das Element 8 oder Greifer-Modul, wobei das Element 8 oder Greifer-Modul einen Motor, Zahnriemen und Rollen aufweist, welche durch das Auf- und Abwickeln von Stahlbändern den Greifer oder das Greifelement 9 des Fahrzeugs heben und senken. Das Element 8 oder Greifer-Modul kann durch den Ausfahrmechanismus über das Transportfahrzeug 1 oder einen benachbarten Schacht bewegt werden, um Behälter 2 aufzunehmen oder abzusetzen.

Der Ausfahrmechanismus wird durch Linearführungen oder Führungen 11 gelagert, welche als Vollauszug ausgeführt sind. Die Linearführungen können hierfür neben oder über dem Hubmodul oder Greifelement 9 angebracht werden, wobei auch die Anordnung der Führungselemente neben- oder übereinander möglich ist. Beispiele für die Linearführungen sind Schubladenauszüge, Kugelumlaufschlitten, Gleitleisten und weitere.

Der Antrieb zum seitlichen Verfahren des Elements 8 oder Greifelements 9 durch den Ausfahrmechanismus erfolgt über eine Zahnstange, die durch einen Riemen angetrieben wird, welcher wiederum von einem Motor bewegt wird. Alternativ können hierfür auch Zahnräder, Seilzüge, Omega-Antriebe, Linearmotoren oder weitere Systeme eingesetzt werden.

Der Antrieb kann über, neben oder unter dem Element 8 oder Hubmodul positioniert sein oder in dieses integriert sein. Der Antrieb ist entweder am Transportfahrzeug 1 angebracht oder fährt zusammen mit dem Element 8 oder Hubmodul aus.

Die Positionierung erfolgt über zwei Lichtschranken als Referenzpunkte und einen Inkrementalwertgeber im Antrieb. Alternativen hierzu sind Absolutwertgeber, optische Distanzsensoren - Laser, IR -, akustische Distanzsensoren, beispielsweise Ultraschallsensoren, Seilzug-Wegsensoren, andere Formen von Inkrementalgebern oder das einfache Anfahren der Endlagen durch Endlagesensoren - Taster, Lichtschranken, Initiatoren usw.

Die Versorgungs- und Steuerungskabel des Elements 8 oder Hubmoduls werden durch eine Energiekette vom festen Fahrzeugteil zum beweglichen Element 8 oder Hubmodul geführt. Alternativ hierzu sind Schleifleitungen, ungeführte Kabel, Funkverbindungen und mitgeführte Kurzzeitenergiespeicher vorstellbar.

Wesentliche Elemente von Ausführungsbeispielen lassen sich wie folgt angeben:
- Die Greifeinrichtung 7 kann einen obersten Behälter 2 in einem Schacht anheben, indem vertikal ein Greifelement 9 abgelassen wird.
- Die Greifeinrichtung 7 kann einen über die Gitterstruktur 3 angehobenen Behälter 2 horizontal zum Transportfahrzeug 1 verfahren.
- Die Greifeinrichtung 7 oder ein Element 8 der Greifeinrichtung 7 kann auch auf beiden Seiten ausfahren und auf beiden Seiten das Greifelement 9 ablassen.
- Eingefahren kann das Transportfahrzeug 1 bis 1,5 Gitterzellen 12 belegen.
- Die Greifeinrichtung 7 oder das Greifelement 9 kann den Behälter 2 im Transportfahrzeug 1 im eingefahrenen Zustand absetzen.
- Das Ausfahren kann über eine beidseitige angeordnete Führung 11 und einen Motor oder Antrieb umgesetzt werden.
- Der Motor oder Antrieb der Greifeinrichtung 7 kann mitfahrend auf dem horizontal ausfahrenden Element 8 fest angeordnet sein.
- Der Motor oder Antrieb auf oder in der Greifeinrichtung 7 kann fest auf dem Transportfahrzeug 1 angeordnet sein.
- Das Transportfahrzeug 1 kann mehr als nur einen Behälter 2 innerhalb des Transportfahrzeugs 1 oder Aufnahmeraums 6 absetzen.
- Es kann nacheinander je ein Behälter 2 gegriffen und dann übereinander neben dem Transportfahrzeug 1 und/oder im Transportfahrzeug 1 abgesetzt werden.
- Neben einem Schacht mit einem tiefliegenden Behälter 2 kann sich mehr als ein Transportfahrzeug 1 positionieren.
- Die Mehrzahl an Transportfahrzeugen 1 oder sämtliche Transportfahrzeuge 1 können die Bewegung der Behälter 2 über eine zentrale oder direkte/dezentrale Steuerung koordinieren.
- Der gewünschte tiefliegende Behälter 2 kann von einem weiteren Transportfahrzeug 1, das nicht am Graben beteiligt ist, abtransportiert werden.
- Das Transportfahrzeug 1 kann fix eine Höhe für eine Kapazität von mehr als einem Behälter 2 aufweisen.
- Das Transportfahrzeug 1 kann eine variable Höhe für eine Kapazität von einem oder mehr als einem Behälter 2 aufweisen, die durch ein aktives Ausfahren einer Säule 10 oder eines Transportfahrzeugturms realisiert werden kann.

Ein Verfahren zum Zugreifen auf einen Behälter 2 in einem Lager- und Entnahmesystem, wobei mindestens ein Transportfahrzeug 1 eingesetzt wird, kann wie folgt durchgeführt werden:
Das hier erläuterte beispielhafte Verfahren arbeitet mit zwei Transportfahrzeugen 1 - hier der besseren Unterscheidbarkeit halber T1 und T2 genannt -, die zum Umladen von Behältern 2 geeignet sind. Die Räumung eines Schachts oder einer Lagersäule - diese beiden Begriffe "Schacht" und "Lagersäule" werden hier synonym verwendet - erfolgt also hier mit zwei Transportfahrzeugen 1. Es können jedoch auch mehr als zwei Transportfahrzeuge 1 verwendet werden. Daher kann die folgende Beschreibung in analoger Weise auch auf ein Ausführungsbeispiel mit mehr als zwei Transportfahrzeugen 1 gelesen werden.

Ausgangssituation:
Betrachtet wird ein Lager- und Entnahmesystem in Form eines Blocklagers mit sehr hoher Auslastung. Es soll der 15. Behälter 2 von oben eines Schachts S1 ausgelagert werden, alle umliegenden Schächte sind bis zur Fahrbahnhöhe befüllt.

Verfahrensbeschreibung:
1. Zwei Transportfahrzeuge T1 und T2 positionieren sich neben dem Schacht S1.
2. Ein Transportfahrzeug T1 entnimmt den obersten Behälter des Schachts S1.
3. Während dieses Transportfahrzeug T1 den Behälter auf der anderen Fahrzeugseite auf den dort lagernden Behälter im Schacht S2 abstellt, greift das 2. Transportfahrzeug T2 den nun obersten Behälter des Schachts S1.
4. Das Transportfahrzeug T2 stellt den Behälter in Schacht S3, welcher seinerseits auf der anderen Fahrzeugseite von T2 liegt. T1 entnimmt derweil den nächsten Behälter aus S1 und stellt ihn auf S2.
5. Der Vorgang wird fortgesetzt bis jeweils vier Behälter auf die Schächte S2 und S3 abgestellt wurden.
6. Die Transportfahrzeuge T1 und T2 entnehmen nacheinander jeweils drei weitere Behälter und stellen diese auf der Ladefläche des Fahrzeugs ab.
7. Das Transportfahrzeug T1 oder T2 fährt ein Feld in Z-Richtung, um den Zugriff auf S1 für ein weiteres Transportfahrzeug T3 freizugeben, das lediglich eine Transportfunktion und keine Umladeaufgabe hat. Dieses fährt auf die frei gewordene Position und entnimmt den anfangs gewünschten Behälter 2 aus dem Schacht S1.
8. Das Transportfahrzeug T3 transportiert den Behälter zum definierten Übergabepunkt während die Transportfahrzeuge T1 und T2 die zuvor umgestapelten Behälter zurück in den Schacht S1 stapeln.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Transportfahrzeug
- 2: Behälter
- 3: Gitterstruktur
- 4: Fahrwerk
- 5: Antrieb
- 6: Aufnahmeraum
- 7: Greifeinrichtung
- 8: Element
- 9: Greifelemente
- 10: Säule
- 11: Führung
- 12: Gitterzelle

## Patentansprüche

1. Verfahren zum Zugreifen auf einen Behälter (2) in einem Lager- und Entnahmesystem, wobei mindestens ein Transportfahrzeug (1) eingesetzt wird, das aufweist:
ein Fahrwerk (4),
einen oberhalb des Fahrwerks (4) ausgebildeten Aufnahmeraum (6) für einen oder mehrere Behälter (2) und
eine Greifeinrichtung (7) zum Erfassen, Bewegen und Absetzen eines oder mehrerer Behälter (2),
wobei die Greifeinrichtung (7) derart ausgebildet ist, dass ein Erfassen des oder der Behälter (2) seitlich außerhalb des Aufnahmeraums (6) und ein Bewegen des oder der Behälter (2) in den Aufnahmeraum (6) und/oder ein Bewegen des oder der Behälter (2) aus dem Aufnahmeraum (6) nach seitlich außerhalb des Aufnahmeraums (6) ermöglicht sind, und
wobei das Transportfahrzeug (1) mit seiner Greifeinrichtung (7) zum Stapeln oder Umstapeln von Behältern (2) neben dem Transportfahrzeug (1) genutzt wird,
**dadurch gekennzeichnet, dass** das Transportfahrzeug (1) zum Auftürmen von Behältern (2) bis oberhalb einer Gitterstruktur (3) des Lager- und Entnahmesystems, auf welcher das Transportfahrzeug (1) fährt, und zum Auftürmen von Behältern (2) neben und im Aufnahmeraum (6) in mehreren Etagen genutzt wird.

2. Verfahren zum Zugreifen auf einen Behälter (2) in einem Lager- und Entnahmesystem, wobei das Lager- und Entnahmesystem eine Gitterstruktur (3) mit einer Vielzahl von Gitterzellen (12) aufweist, wobei jede Gitterzelle (12) eine Lagersäule einer unterhalb der Gitterstruktur (3) angeordneten Behälter-Lagerstruktur definiert, wobei die Lagersäulen eingerichtet sind, jeweils einen vertikalen Stapel von Behältern (2) aufzunehmen, und wobei mindestens ein Transportfahrzeug (1) eingesetzt wird, das aufweist:
ein Fahrwerk (4),
einen oberhalb des Fahrwerks (4) ausgebildeten Aufnahmeraum (6) für einen oder mehrere Behälter (2) und
eine Greifeinrichtung (7) zum Erfassen, Bewegen und Absetzen eines oder mehrerer Behälter (2),
wobei die Greifeinrichtung (7) derart ausgebildet ist, dass ein Erfassen des oder der Behälter (2) seitlich außerhalb des Aufnahmeraums (6) und ein Bewegen des oder der Behälter (2) in den Aufnahmeraum (6) und/oder ein Bewegen des oder der Behälter (2) aus dem Aufnahmeraum (6) nach seitlich außerhalb des Aufnahmeraums (6) ermöglicht sind, und
wobei das Transportfahrzeug (1) mit seiner Greifeinrichtung (7) zum Stapeln oder Umstapeln von Behältern (2) neben dem Transportfahrzeug (1) genutzt wird,
**dadurch gekennzeichnet, dass** mehrere Behälter (2) neben einem ausgegrabenen Schacht, auf einem anderen Schacht, zwischengelagert werden und dass das Transportfahrzeug (1) zum Auftürmen von Behältern (2) neben und im Aufnahmeraum (6) in mehreren Etagen genutzt wird.

3. Verfahren nach Anspruch 1 oder 2, **dadurch gekennzeichnet, dass** mehrere Behälter (2) aufgenommen und neben dem Transportfahrzeug (1) aufgetürmt werden.

4. Verfahren nach einem der Ansprüche 1 bis 3, **dadurch gekennzeichnet, dass** ein oder mehrere Behälter (2) mittels der Greifeinrichtung (7) in dem Aufnahmeraum (6) abgesetzt werden.

5. Verfahren nach einem der Ansprüche 1 bis 4, **dadurch gekennzeichnet, dass** ein oder mehrere Behälter (2) mittels der Greifeinrichtung (7) horizontal oder seitlich in den Aufnahmeraum (6) bewegt werden.

6. Verfahren nach einem der Ansprüche 1 bis 5, **dadurch gekennzeichnet, dass** ein oder mehrere Behälter (2) von verschiedenen Seiten aus, insbesondere von einander gegenüberliegenden Seiten aus, mittels der Greifeinrichtung (7) in den Aufnahmeraum (6) bewegt werden.

7. Verfahren nach einem der Ansprüche 1 bis 6, **dadurch gekennzeichnet, dass** die Greifeinrichtung (7) oder ein Modul der Greifeinrichtung (7) mittels einer Führung (11) oder einer Kulisse in horizontaler Richtung geführt oder verschoben wird.

8. Verfahren nach einem der Ansprüche 1 bis 7, **dadurch gekennzeichnet, dass** einerseits für das Anheben und Absetzen und andererseits für das Bewegen des oder der Behälter (2) unterschiedliche Antriebe verwendet werden.

9. Verfahren nach einem der Ansprüche 1 bis 8, **dadurch gekennzeichnet, dass** mehrere Behälter (2) nebeneinander und/oder übereinander in dem Aufnahmeraum angeordnet werden.

10. Verfahren nach einem der Ansprüche 1 bis 9, **dadurch gekennzeichnet, dass** die Dimensionierung, insbesondere die Höhe, des Aufnahmeraums (6) und damit die Dimensionierung, insbesondere die Höhe, des Transportfahrzeugs (1) variiert werden, wobei vorzugsweise hierzu das Transportfahrzeug (1) mit einer Linearführung und/oder einem Antrieb zur Variierung der Dimensionierung oder Höhe ausgerüstet wird.

11. Verfahren nach einem der Ansprüche 1 bis 10, **dadurch gekennzeichnet, dass** die Höhe der Greifeinrichtung (7) und/oder eines Greifelements (9) der Greifeinrichtung (7) variiert wird, sodass ein Erfassen des oder der Behälter (2) in unterschiedlichen vorgebbaren Höhen erfolgen kann.

12. Verfahren nach einem der Ansprüche 1 bis 11, **dadurch gekennzeichnet, dass** ein Antrieb (5) für das Transportfahrzeug (1) - insbesondere im Bereich des Fahrwerks (4) - unterhalb des Aufnahmeraums (6) angeordnet wird.

## Revendications

1. Procédé permettant d'accéder à un récipient (2) dans un système de stockage et de prélèvement, dans lequel au moins un véhicule de transport (1) est utilisé, qui comprend :
un châssis (4),
un espace de réception (6) réalisé au-dessus du châssis (4) pour un ou plusieurs récipients (2) et
un dispositif de préhension (7) destiné à saisir, déplacer et déposer un ou plusieurs récipients (2),
dans lequel le dispositif de préhension (7) est réalisé de sorte qu'une saisie du ou des récipients (2) latéralement à l'extérieur de l'espace de réception (6) et un déplacement du ou des récipients (2) dans l'espace de réception (6) et/ou un déplacement du ou des récipients (2) hors de l'espace de réception (6) latéralement vers l'extérieur de l'espace de réception (6) sont possibles, et
dans lequel le véhicule de transport (1) muni de son dispositif de préhension (7) est utilisé pour empiler ou désempiler des récipients (2) à côté du véhicule de transport (1),
**caractérisé en ce que** le véhicule de transport (1) est utilisé pour accumuler des récipients (2) au-dessus d'une structure de grille (3) du système de stockage et de prélèvement, sur laquelle circule le véhicule de transport (1), et pour accumuler des récipients (2) à côté et dans l'espace de réception (6) sur plusieurs niveaux.

2. Procédé permettant d'accéder à un récipient (2) dans un système de stockage et de prélèvement, dans lequel le système de stockage et de prélèvement comprend une structure de grille (3) pourvue d'une pluralité de cellules de grille (12), dans lequel chaque cellule de grille (12) définit une colonne de stockage d'une structure de stockage de récipients disposée au-dessous de la structure de grille (3), dans lequel les colonnes de stockage sont agencées pour recevoir respectivement une pile verticale de récipients (2), et dans lequel au moins un véhicule de transport (1) est utilisé, qui comprend :
un châssis (4),
un espace de réception (6) réalisé au-dessus du châssis (4) pour un ou plusieurs récipients (2) et
un dispositif de préhension (7) destiné à saisir, déplacer et déposer un ou plusieurs récipients (2),
dans lequel le dispositif de préhension (7) est réalisé de sorte qu'une saisie du ou des récipients (2) latéralement à l'extérieur de l'espace de réception (6) et un déplacement du ou des récipients (2) dans l'espace de réception (6) et/ou un déplacement du ou des récipients (2) hors de l'espace de réception (6) latéralement vers l'extérieur de l'espace de réception (6) sont possibles, et
dans lequel le véhicule de transport (1) muni de son dispositif de préhension (7) est utilisé pour empiler ou désempiler des récipients (2) à côté du véhicule de transport (1),
**caractérisé en ce que** plusieurs récipients (2) sont entreposés provisoirement à côté d'une cage enterrée, sur une autre cage, et **en ce que** le véhicule de transport (1) est utilisé pour empiler les récipients (2) à côté et dans l'espace de réception (6) sur plusieurs niveaux.

3. Procédé selon la revendication 1 ou 2, **caractérisé en ce que** plusieurs récipients (2) sont reçus et empilés à côté du véhicule de transport (1).

4. Procédé selon l'une des revendications 1 à 3, **caractérisé en ce qu'**un ou plusieurs récipients (2) sont déposés dans l'espace de réception (6) au moyen du dispositif de préhension (7).

5. Procédé selon l'une des revendications 1 à 4, **caractérisé en ce qu'**un ou plusieurs récipients (2) sont déplacés horizontalement ou latéralement dans l'espace de réception (6) au moyen du dispositif de préhension (7).

6. Procédé selon l'une des revendications 1 à 5, **caractérisé en ce qu'**un ou plusieurs récipients (2) sont déplacés depuis différents côtés, en particulier depuis des côtés opposés, au moyen du dispositif de préhension (7) dans l'espace de réception (6).

7. Procédé selon l'une des revendications 1 à 6, **caractérisé en ce que** le dispositif de préhension (7) ou un module du dispositif de préhension (7) est guidé ou décalé dans la direction horizontale au moyen d'un guide (11) ou d'une coulisse.

8. Procédé selon l'une des revendications 1 à 7, **caractérisé en ce que** des entraînements différents sont utilisés, d'une part pour le levage et la dépose, et d'autre part pour le déplacement du ou des récipients (2).

9. Procédé selon l'une des revendications 1 à 8, **caractérisé en ce que** plusieurs récipients (2) sont disposés côte à côte et/ou les uns au-dessus des autres dans l'espace de réception.

10. Procédé selon l'une des revendications 1 à 9, **caractérisé en ce que** les dimensions, en particulier la hauteur, de l'espace de réception (6) et, par conséquent, les dimensions, en particulier la hauteur, du véhicule de transport (1) sont modifiées, dans lequel le véhicule de transport (1) est équipé de préférence d'un guide linéaire et/ou d'un entraînement permettant de faire varier les dimensions ou la hauteur.

11. Procédé selon l'une des revendications 1 à 10, **caractérisé en ce que** la hauteur du dispositif de préhension (7) et/ou d'un élément de préhension (9) du dispositif de préhension (7) est modifiée, de sorte que la saisie du ou des récipients (2) peut s'effectuer à différentes hauteurs prédéfinissables.

12. Procédé selon l'une des revendications 1 à 11, **caractérisé en ce qu'**un entraînement (5) pour le véhicule de transport (1) - en particulier au niveau du châssis (4) - est disposé sous l'espace de réception (6).

## Claims

1. A method for accessing a container (2) in a storage and retrieval system, wherein at least one transport vehicle (1) is used, which comprises:
a chassis (4),
a receiving space (6) formed above the chassis (4) for one or more containers (2), and
a gripping device (7) for gripping, moving, and depositing one or more containers (2),
wherein the gripping device (7) is configured such that gripping of the container (2) or containers (2) laterally outside the receiving space (6) and moving of the container (2) or containers (2) into the receiving space (6) and/or moving the container (2) or containers (2) out of the receiving space (6) laterally to the outside of the receiving space (6) are made possible, and
wherein the transport vehicle (1) is used with its gripping device (7) for stacking or restacking containers (2) next to the transport vehicle (1),
**characterized in that** the transport vehicle (1) is used to stack containers (2) up to a height above a grid structure (3) of the storage and retrieval system, on which the transport vehicle (1) travels, and to stack containers (2) next to and within the receiving space (6) on several levels.

2. A method for accessing a container (2) in a storage and retrieval system, wherein the storage and retrieval system comprises a grid structure (3) with a plurality of grid cells (12), each grid cell (12) defining a storage column of a container storage structure arranged below the grid structure (3), wherein the storage columns are configured to each receive a vertical stack of containers (2), wherein at least one transport vehicle (1) is used, which comprises:
a chassis (4),
a receiving space (6) formed above the chassis (4) for one or more containers (2), and
a gripping device (7) for gripping, moving, and depositing one or more containers (2),
wherein the gripping device (7) is configured such that gripping of the container (2) or containers (2) laterally outside the receiving space (6) and moving of the container (2) or containers (2) into the receiving space (6) and/or moving the container (2) or containers (2) out of the receiving space (6) laterally to the outside of the receiving space (6) are made possible, and
wherein the transport vehicle (1) is used with its gripping device (7) for stacking or restacking containers (2) next to the transport vehicle (1),
**characterized in that** multiple containers (2) are temporarily stored next to a dug-out shaft, on another shaft, and that the transport vehicle (1) is used to stack containers (2) next to and within the receiving space (6) on several levels.

3. The method according to claim 1 or 2, **characterized in that** multiple containers (2) are received and stacked next to the transport vehicle (1).

4. The method according to any one of claims 1 to 3, **characterized in that** one or more containers (2) are deposited in the receiving space (6) by means of the gripping device (7).

5. The method according to any one of claims 1 to 4, **characterized in that** one or more containers (2) are moved horizontally or laterally into the receiving space (6) by means of the gripping device (7).

6. The method according to any one of claims 1 to 5, **characterized in that** one or more containers (2) are moved into the receiving space (6) from different sides, in particular from opposite sides, by means of the gripping device (7).

7. The method according to one of claims 1 to 6, **characterized in that** the gripping device (7) or a module of the gripping device (7) is guided or moved in the horizontal direction by means of a guide (11) or a link.

8. The method according to one of claims 1 to 7, **characterized in that** different drives are used for lifting and depositing on the one hand and for moving the container (2) or containers (2) on the other hand.

9. The method according to any one of claims 1 to 8, **characterized in that** multiple containers (2) are arranged next to each other and/or on top of each other in the receiving space.

10. The method according to any one of claims 1 to 9, **characterized in that** the dimensioning, in particular of the height, of the receiving space (6) and thus the dimensioning, in particular of the height, of the transport vehicle (1) are varied, wherein preferably for this purpose the transport vehicle (1) is equipped with a linear guide and/or a drive for varying the dimensioning or height.

11. The method according to any one of claims 1 to 10, **characterized in that** the height of the gripping device (7) and/or of a gripping element (9) of the gripping device (7) is varied so that the container (2) or containers (2) can be gripped at different predeterminable heights.

12. The method according to any one of claims 1 to 11, **characterized in that** a drive (5) for the transport vehicle (1) is arranged below the receiving space (6), in particular in the region of the chassis (4).
